# EUROPÄISCHE PATENTSCHRIFT

(11) **EP 1 319 551 B1**
(45) Veröffentlichungstag und Bekanntmachung des Hinweises auf die Patenterteilung: **13.07.2005**
(21) Anmeldenummer: 02027220.9
(22) Anmeldetag: 06.12.2002
(51) Int. Cl.: B60N 2/58, B60N 2/427, B60N 2/48

(54) **Bezug für eine crashaktive Rückenlehne eines Kraftfahrzeugsitzes**
Cover for a crash-activated backrest in a vehicle seat
Revêtement pour un dossier activé par un accident dans un siège de véhicule

(30) Priorität: 13.12.2001 DE 10161471
(43) Veröffentlichungstag der Anmeldung: 18.06.2003
(73) Patentinhaber: ADAM OPEL AG, 65423 Rüsselsheim (DE)
(72) Erfinder: Berhard, Werner, Dipl.-Ing., 64569 Nauheim (DE); Möller, Mark, Dipl.-Ing., 38165 Lehre (DE)

(56) Entgegenhaltungen:
- DE-A- 19 910 666
- DE-A- 19 927 471
- PATENT ABSTRACTS OF JAPAN vol. 1998, no. 03, 27. Februar 1998 (1998-02-27) & JP 09 294650 A (NANBA PRESS KOGYO KK;MITSUBISHI MOTORS CORP), 18. November 1997 (1997-11-18)
- PATENT ABSTRACTS OF JAPAN vol. 1999, no. 02, 26. Februar 1999 (1999-02-26) & JP 10 309220 A (T S TEC KK), 24. November 1998 (1998-11-24)

## Beschreibung

Die vorliegende Erfindung betrifft einen Sitzbezug für eine crashaktive Rückenlehne eines Kraftfahrzeugsitzes gemäss dem Oberbegriff des Anspruchs 1.

Eine der häufigsten Verletzungen im täglichen Straßenverkehr sind Nackenverletzungen eines Fahrzeuginsassen infolge eines sogenannten Peitschenschlages seines Kopfes. Derartige Verletzungen treten bei Heckcrashs schon bei relativ niedrigen Geschwindigkeiten auf, weil die Nackenwirbelsäule eines Insassen dabei enormen Beanspruchungen ausgesetzt ist. Um diese Verletzungen zu vermeiden bzw. zu vermindern, sind Kraftfahrzeugsitze mit sogenannten crashaktiven, genauer gesagt heck-crashaktiven, Kopfstützen bzw. Rückenlehnen entwickelt worden. Bei diesen Sitzen wird die bei einem Heckcrash auf die Rückenlehne des Kraftfahrzeugsitzes wirkende Trägheitskraft des Körpers eines Sitzinsassen durch entsprechende Übertragungsmechanismen derart auf die Kopfstütze bzw. auf ein diese tragendes Lehnenrahmenteil übertragen, dass sich die Kopfstütze nach vorn zum Kopf des Sitzinsassen hin zubewegt. Dadurch wird dem Peitschenschlag des Kopfes des Sitzinsassen entgegengewirkt.

Crashaktive Rückenlehnen besitzen ein feststehendes Rahmenunterteil und ein relativ zu diesem im oben genannten Sinne bewegliches Rahmenoberteil. Diese beiden Rahmenteile sind im normalen Fahrbetrieb gegeneinander festgelegt, z. B. durch starke Federmittel, so dass sie ein quasi starres Gebilde ergeben. Der Sitzbezug, welcher den Rückenlehnenrahmen sowie den Polsterkörper überzieht, ist nach dem Stand der Technik für diesen normalen Fahrbetrieb konzipiert. Kommt es nun bei einem Heckcrash zu der genannten Relativbewegung zwischen den beiden Rahmenteilen der Rückenlehne, so hindert der Sitzbezug diese Bewegung, da er nur in gewissen Grenzen dehnbar ist. Er behindert somit die gewollte Relativbewegung zwischen den beiden Rahmenteilen der Rückenlehne, so dass in nachteiliger Weise die NIC (Neck Injury Criteria)-Werte während des Heckaufpralls erhöht werden.

Aus JP 09294650-A, welches als nächstliegender Stand der Technik betrachtet wird, ist eine Rückenlehne bekannt, deren Kopfbereich gegenüber dem unteren Bereich nach vorn kippbar ist. Um diese Kippbewegung zu ermöglichen, bestehen die durchgehenden Bezugsseitenteile und das durchgehende Bezugsrückenteil aus einem Bezugsmaterial, das dehnbarer ist als das Bezugsmaterial des Vorderteils. Eine ähnliche Lösung ist in DE 199 57 194 A1 offenbart.

Aufgabe der vorliegenden Erfindung ist es, den oben genannten Mangel von Sitzbezügen für eine crashaktive Rückenlehne abzustellen.

Diese Aufgabe wird mit einem Bezug gelöst, der die Merkmale des Anspruchs 1 aufweist.

Aufgrund der erfindungsgemäßen Ausbildung eines Bezugskopfes kann dieser eine Relativbewegung zu dem feststehenden Bezugsunterteil ausüben, so dass das sich im Crashfall entsprechend bewegende obere Rahmenteil des Rückenlehnenrahmens durch den Bezug keinen bzw. nur unwesentlichen Zwängungen ausgesetzt ist. Dadurch ergeben sich geringere NIC-Werte als das bei durchgehenden Bezügen der Fall ist.

In vorteilhafter Ausgestaltung der Erfindung überlappt der Bezugskopf die feststehenden, unteren Seiten- und Rückenteile des Bezuges. Dadurch ergibt sich ein optisch ansprechender Übergang zwischen dem Bezugskopf und dem Bezugsunterteil.

Diesbezüglich ist es weiterhin von Vorteil, wenn der untere Rand des Rückenteils des Bezugskopfes in das bewegliche Rahmenteil des Rückenlehnenrahmens eingehängt ist. Dadurch ergibt sich eine bessere Fixierung des Bezugskopfes.

Um einen faltenfreien Sitz des Bezuges auch nach erfolgter Auslösung der crashaktiven Rückenlehne zu garantieren, sind im Überlappungsbereich von Bezugskopf und Bezugsunterteil elastische Mittel, insbesondere Gummibänder vorgesehen, die die Bezugsteile in ihre ursprüngliche Form ziehen.

Die Erfindung wird nachstehend anhand von Ausführungsbeispielen näher erläutert. In der dazugehörigen Zeichnung zeigt:
- Fig. 1: einen perspektivischen Blick von schräg vorn auf die Tragstruktur einer crashaktiven Rückenlehne eines Kraftfahrzeugsitzes,
- Fig. 2: eine schematische Seitenansicht des Kraftfahrzeugsitzes, dessen Rückenlehne mit einem Bezug gemäß einer ersten Ausführungsform der Erfindung versehen ist,
- Fig. 3: einen Schnitt A-A gemäss Fig. 2 in vergrößertem Maßstab,
- Fig. 4: eine teilweise abgeschnittene perspektivische Rückansicht der Rückenlehne des Kraftfahrzeugsitzes gemäss Fig. 2,
- Fig. 5: einen Schnitt B-B gemäss Fig. 4 in vergrößerter Darstellung,
- Fig. 6: eine Darstellung gemäss Fig. 4, wobei die Auslösestellung der crashaktiven Rückenlehne in Strichlinien dargestellt ist,
- Fig. 7: einen Schnitt C-C gemäss Fig. 6 in vergrößertem Maßstab,
- Fig. 8: eine schematische Vorder- bzw. Rückansicht des oberen Bereichs einer Rückenlehne, wobei in der linken und in der rechten Bildhälfte jeweils eine weitere Ausführungsform der Erfindung dargestellt sind, und
- Fig. 9: eine schematische Seitenansicht gemäss Fig. 8, welche die Rückenlehne im nicht ausgelösten und im ausgelösten Zustand zeigt.

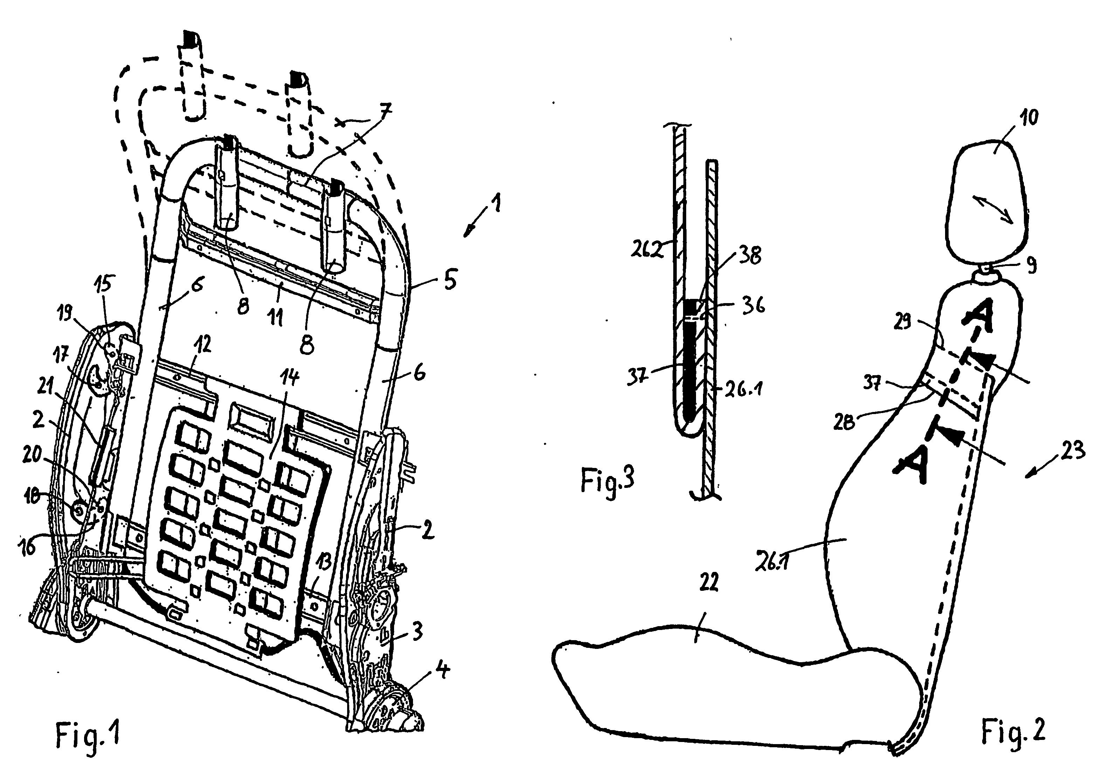

Der in Fig. 1 gezeigte Rahmen 1 einer Rückenlehne 23 eines Kraftfahrzeugsitzes besitzt zwei Seitenholme 2, die als Blech-Formteile ausgebildet sind und an ihrem unteren Ende über Adapter 3 und einen Drehversteller 4 mit der Tragstruktur des nicht dargestellten Sitzteils verbunden sind. Der Drehversteller 4 gestattet eine Neigungsverstellung des Rückenlehnen-Rahmens 1 gegenüber dem Sitzteil. Innerhalb der Seitenholme 2 ist ein Innenrahmen 5 angeordnet. Dieser besitzt Seitenteile 6, die die Seitenholme 2 nach oben überragen und an ihrem oberen Ende durch einen bogenförmigen Querträger 7 starr miteinander verbunden sind. An den Querträger 7 sind zwei parallel voneinander beabstandete Führungsrohre 8 angeschweißt, die Haltestangen 9 einer in dieser Figur nicht dargestellten Kopfstütze 10 (siehe Fig. 2, 8 und 9) höhenverstellbar aufnehmen. Unterhalb des Querträgers 7 ist eine Traverse 11 in Form eines Blech-Formteils mit den Seitenteilen 6 des Innenrahmens starr verbunden. Im Bereich ihrer unteren Enden sind die Seitenteile 6 des Innenrahmens 5 durch zwei weitere, voneinander beabstandete Traversen 12 und 13 starr miteinander verbunden. Auf diese Traversen 12 und 13 ist eine Prallplatte 14 aufgesetzt, die in noch zu beschreibender Weise als Prallmittel im Falle eines Heckcrashs dient.

Der Innenrahmen 5 ist schwenkbeweglich in die Seitenholme 2 des Rückenlehnen-Rahmens 1 eingehängt. Dazu sind auf beiden Rahmenseiten zwei voneinander beabstandete Schwenkhebel 15, 16 vorgesehen, die in Gelenkpunkten 17 bzw. 18 an den Seitenholmen 2 und in Gelenkpunkten 19, 20 an den Seitenteilen 6 gelagert sind. Der Innenrahmen 5 ist durch eine auf beiden Rahmenseiten vorgesehene Zugfeder 21, die mit ihrem einen Ende in den benachbarten Seitenholm 2 und mit ihrem anderen Ende in den Innenrahmen 5 eingehängt ist, in seine Gebrauchsposition vorgespannt. In dieser Gebrauchsposition, die während normaler Fahrzustände immer vorliegt, bilden der Innenrahmen 5 und die Seitenholme 2 somit ein quasi starres Gebilde.

Im Falle eines Heckcrashs wird der Oberkörper eines Sitzinsassen mit sehr großer Kraft in die Rückenlehne, d.h. gegen die Prallplatte 14 gepresst. Dadurch verschwenkt der Innenrahmen 5 in seinem oberen Bereich nach vorn und oben, was in Fig. 1 mit Strichlinien angedeutet ist. Aufgrund dieser Bewegung bewegt sich auch die Kopfstütze 10 auf den Kopf des Sitzinsassen zu, so dass dem Peitschenschlag und den damit verbundenen Verletzungsrisiken entgegengewirkt wird.

Die oben stehend beschriebene crashaktive Rückenlehne entspricht in ihrem Aufbau dem Stand der Technik. Wesentlich für die vorliegende Erfindung ist nicht dieser Aufbau, sondern die Bewegung des oberen Lehnenbereiches nach vorn bzw. nach vorn und oben. Um diese im Crashfall gewollte Bewegung der Rückenlehne nicht zu behindern, ist ihr Bezug erfindungsgemäß geteilt ausgeführt.

Die Fig. 2 - 7 zeigen eine erste Ausführungsform der Erfindung.

Fig. 2 zeigt eine schematische Seitenansicht eines Kraftfahrzeugsitzes mit einem Sitzteil 22 und einer Rückenlehne 23. Sowohl das Sitzteil 22 als auch die Rückenlehne 23 sind in üblicher Weise gepolstert und mit einem Bezug aus einem textilen Material oder Leder bezogen.

Im vorliegenden Fall interessiert nur der Bezug der Rückenlehne 23. Dieser besteht aus einem Vorderteil 24, Rückenteil 25 und zwei Seitenteilen 26. Im Gegensatz zum Stand der Technik sind die Seitenteile 26 und das Rückenteil 25 des Bezuges geteilt ausgeführt, so dass sich untere Seitenteile 26.1 und obere Seitenteile 26.2 sowie ein unteres Rückenteil 25.1 und ein oberes Rückenteil 25.2 ergeben. Die oberen Seitenteile 26.2 sind durch eine Querbahn 26.3 miteinander verbunden, wobei diese Querbahn 26.3 einstückig mit den oberen Seitenteilen 26.2 ausgebildet sein kann, wie dargestellt, oder aber über Nähte mit den Seitenteilen 26.2 verbunden sein kann. Die oberen Bezugsteile 26.2, 26.3 und 25.2 bilden zusammen mit dem oberen Bereich des Bezugsvorderteils 24 einen Bezugskopf 27, welcher die unteren Seitenteile 26.1 und das untere Rückenteil 25.1 überlappt. Dabei liegen die Bezugsteile 26.2 und 25.2 des Bezugskopfes 27 außen und die unteren Bezugsteile 26.1 und 25.1 innen. Dadurch ist ein Überlappungsbereich gebildet, der in der Zeichnung mit der Volllinie 28 bzw. der Strichlinie 29 bezeichnet ist. Aufgrund dieser Überlappung ergibt sich ein optisch ansprechender Übergang zwischen dem Bezugskopf 27 und den unteren Bezugsteilen 26.1 und 25.1.

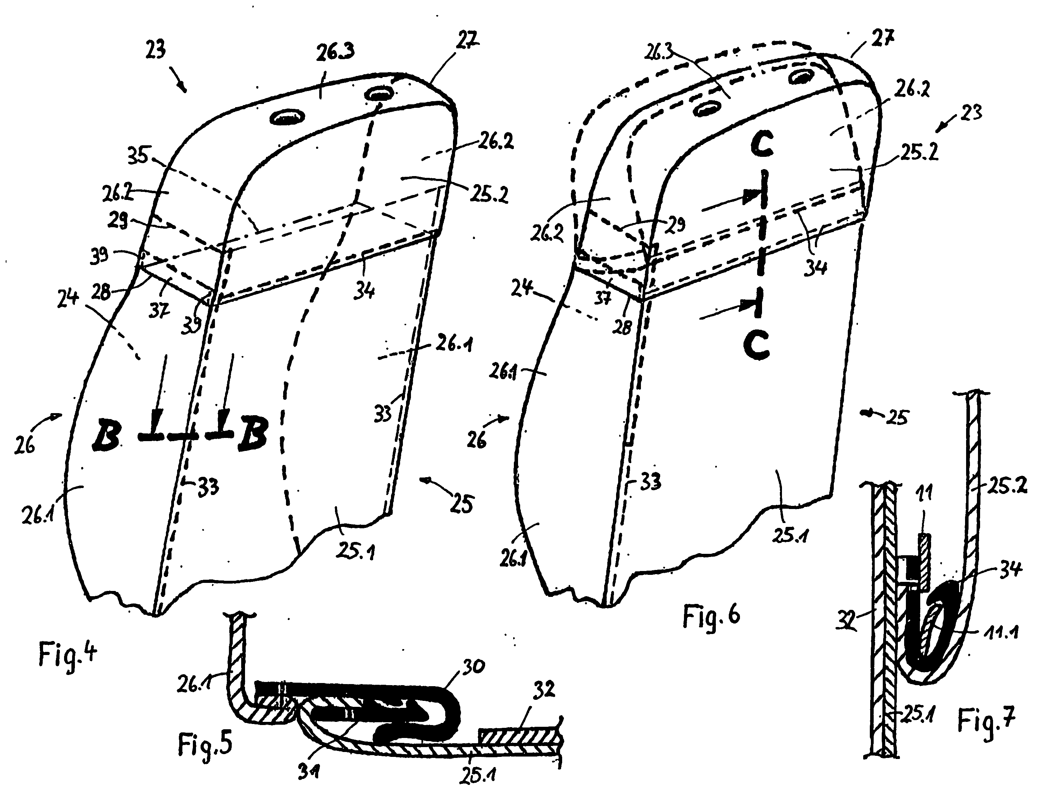

Die Verbindung zwischen den unteren Seitenteilen 26.1 und dem unteren Rückenteil 25.1 erfolgt über Profile 30 bzw. 31, die an die Ränder der Seitenteile 26.1 bzw. des Rückenteils 25.1 angenäht sind. Diese Verbindung geht aus Fig. 5 hervor. Aus dieser Darstellung geht auch hervor, dass das untere Rückenteil 25.1 eine Rückenschale 32 kaschiert, die aus Blech oder Kunststoff gefertigt sein kann. Bei einer optisch ansprechenden Gestaltung der Rückenschale 32 kann die Verkleidung durch das Rückenteil 25.1 auch entfallen. In diesem Falle würden die unteren Bezugsseitenteile 26.1 über Profile direkt in die Rückenschale 32 eingehängt werden. In den Figuren 4 und 6 sind die Profile 30 bzw. 31 durch Strichlinien 33 symbolisiert.

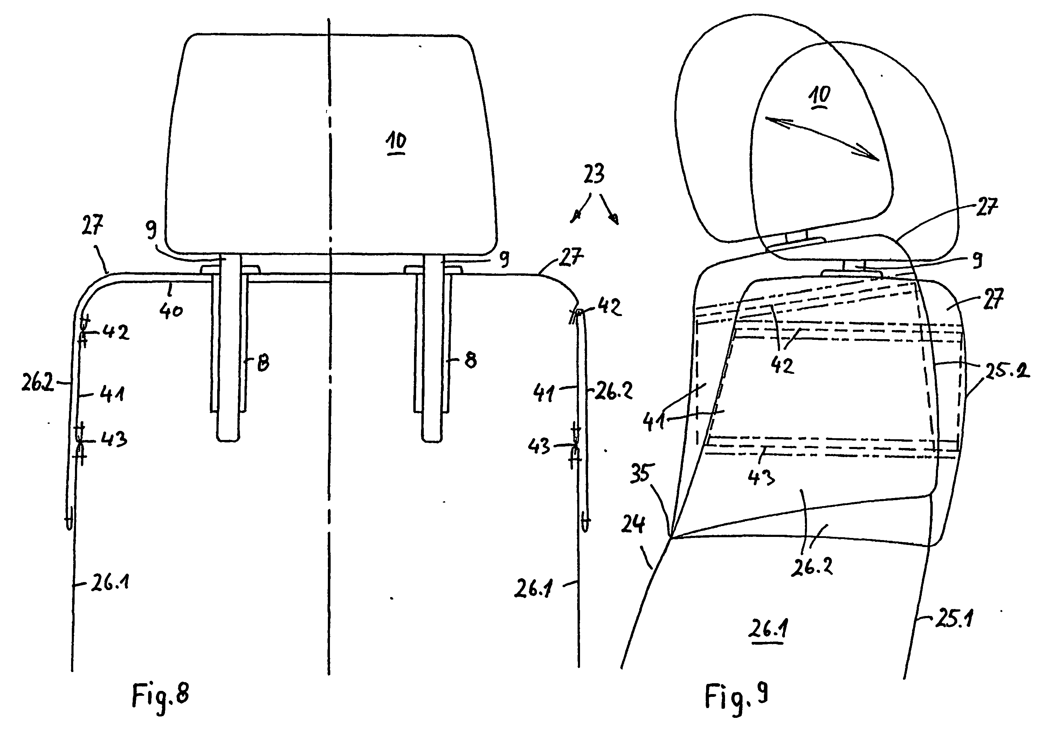

An den unteren Rand des oberen Rückenteils 25.2 ist ebenfalls ein Einhängeprofil 34 angenäht. Dieses Profil 34 wird in die obere Traverse 11 des Innenrahmens 5 (Fig. 1) der Rückenlehne 23 eingehängt. Zu diesem Zweck sind Einhängenasen 11.1 aus der Traverse 11 herausgedrückt. Die beschriebene Ausbildung geht aus der Schnittdarstellung gemäss Fig. 7 hervor.

Aufgrund der erfindungsgemäßen Teilung des Bezuges der Rückenlehne 23 kann dessen Bezugskopf die Nickbewegung des oberen Bereichs des Innenrahmens 5 der Rückenlehne 23 mitmachen, ohne dass es zu Zwängungen zwischen dem Bezug der Rückenlehne 23 und dem Rückenlehnen-Rahmen 1 kommt. Bei dieser Bewegung schwenkt der Bezugskopf 27 um eine gedachte Scharnierachse 35, die in Fig. 4 als Strichpunktlinie 35 in die Vorderseite 24 des Bezuges eingezeichnet ist. Die Nickbewegung des Bezugskopfes 27 geht aus der mit Strichlinien gezeichneten Position in Fig. 6 hervor.

Im Überlappungsbereich des Bezugskopfes 27 mit den unteren Seitenteilen 26.1 ist am unteren Rand der Seitenteile 26.2 mit einer Naht 36 ein Gummiband 37 eingenäht, welches in einer Art Falttasche des unteren Randes der Bezugsteile 26.2 angeordnet ist. Diese Ausbildung geht aus der Schnittdarstellung gemäss Fig. 3 hervor. Das Gummiband 37 ist weiterhin an den Rändern durch vertikale Nähte 39 mit dem inneren Schenkel 38 der Falttasche des unteren Randes der Seitenteile 26.2 vernäht. Diese beidseitig vorgesehenen Gummibänder 37 garantieren, dass der Bezugskopf 27 auch nach erfolgter Auslösung der crashaktiven Rückenlehne 23 faltenfrei sitzt.

In den Fig. 8 und 9 sind zwei weitere Ausführungsbeispiele der Erfindung dargestellt.

In dem Ausführungsbeispiel gemäss der linken Bildhälfte der Fig. 8 ist an die Querbahn 26.3 des Bezugskopfes 27 ein Inlett 40 angenäht, welches aus einem preiswerteren Material bestehen kann, als der nach außen hin sichtbare Bezug der Rückenlehne 23. An das Inlett 40 ist beidseitig (gemeint ist die linke und rechte Rückenlehnenseite) ein Gummiband 41 mit einer horizontalen Naht 42 angenäht. An ihren unteren Rändern sind die Gummibänder 41 ebenfalls durch eine horizontale Naht 43 mit den unteren Seitenteilen 26.1 des Bezuges vernäht. Nach außen sind die Nähte 42 und 43 sowie das Gummiband 41 durch die oberen Seitenteile 26.2 des Bezugskopfes 27 überlappt.

Im Unterschied zu dem eben erläuterten Ausführungsbeispiel ist in der Ausführungsform der Erfindung gemäss der rechten Bildhälfte der Fig. 8 das Gummiband 41 über eine horizontale Naht 42 direkt mit der Querbahn 26.3 vernäht. In diese Naht 42 wird gleichzeitig auch das obere Seitenteil 26.2 des Bezugskopfes 27 eingefasst. Im übrigen entspricht diese Ausführungsform der in der linken Bildhälfte der Fig. 8 dargestellten.

Die Gummibänder 41 gestatten - obwohl sie direkt oder indirekt mit den oberen und unteren Seitenteilen 26.2 und 26.1 des Bezuges verbunden sind - aufgrund ihrer großen Flexibilität eine ungehinderte Nickbewegung des oberen Bereichs des Rückenlehnen-Rahmens 1. Bei dieser Nickbewegung verformen sie sich trapezförmig, wie aus der Darstellung gemäss Fig. 9 hervorgeht. Gleichzeitig erfüllen die Gummibänder 41 auch die Funktion, dass nach Auslösung der crashaktiven Rückenlehne 23 und deren Rückkehr in die normale Gebrauchsposition die betroffenen Bezugsteile ihre alte Position faltenfrei einnehmen.

## Patentansprüche

1. Bezug für eine crashaktive Rückenlehne eines Kraftfahrzeugsitzes mit einem beweglichen oberen Rahmenteil und einem feststehenden unteren Rahmenteil, wobei der Bezug ein Vorderteil, zwei Seitenteile und ein Rückenteil aufweist, **dadurch gekennzeichnet, dass** die Seitenteile (26) und das Rückenteil (25) im oberen Bereich geteilt sind, so dass sich ein Bezugsunterteil (24, 25.1, 26.1) und ein kapuzenartiger Bezugskopf (27) ergeben, wobei letzterer um eine gedachte Scharnierachse (35) im Bezugsvorderteil (24) relativ zum feststehenden Bezugsunterteil (24, 25.1, 26.1) im Wesentlichen eine Nickbewegung in Sitzlängsrichtung ausführen kann.

2. Bezug nach Anspruch 1, **dadurch gekennzeichnet, dass** der Bezugskopf (27) das Bezugsunterteil (24, 25.1, 26.1) im Seiten- und Rückenbereich überlappt.

3. Bezug nach Anspruch 2, **dadurch gekennzeichnet, dass** die Seitenteile (26.1) des Bezugsunterteils im Überlappungsbereich durch elastische Mittel (41) mit dem Bezugskopf (27) verbunden sind, welche nach außen durch die Seitenteile (26.2) des Bezugskopfes (27) abgedeckt sind.

4. Bezug nach Anspruch 2, **dadurch gekennzeichnet, dass** im Überlappungsbereich in die Seitenteile (26.2) des Bezugskopfes (27) in deren unteren Rand elastische Mittel (37) eingesetzt sind, die das Vorderteil (24) und das Rückenteil (25.2) des Bezugskopfes (27) miteinander verbinden.

5. Bezug nach Anspruch 3 oder Anspruch 4, **dadurch gekennzeichnet, dass** die elastischen Mittel Gummibänder (37, 41) sind.

6. Bezug nach einem der vorstehenden Ansprüche, **dadurch gekennzeichnet, dass** der untere Rand des Rückenteils (25.2) des Bezugskopfes (27) in das bewegliche, obere Rahmenteil (5) der Rückenlehne (23) eingehängt ist.

## Claims

1. Cover for a crash-activated backrest of a motor vehicle seat with a movable upper frame part and a stationary lower frame part, wherein the cover comprises a front part, two side parts and a back part, **characterised in that** the side parts (26) and the back part (25) are divided in the upper region, resulting in a lower cover part (24, 25.1, 26.1) and a hood-like cover head (27), wherein the latter can execute a substantially pitching movement in the longitudinal direction of the seat about an imaginary pivot axis (35) in the cover front part (24) relative to the stationary lower cover part (24, 25.1, 26.1).

2. Cover according to Claim 1, **characterised in that** the cover head (27) overlaps the lower cover part (24, 25.1, 26.1) in the side and back region.

3. Cover according to Claim 2, **characterised in that** the side parts (26.1) of the lower cover part are connected to the cover head (27) in the overlap region by resilient means (41) which are covered on the outside by the side parts (26.2) of the cover head (27).

4. Cover according to Claim 2, **characterised in that** resilient means (37) are inserted in the side parts (26.2) of the cover head (27) in the lower edge thereof in the overlap region, which means connect the front part (24) and the back part (25.2) of the cover head (27) together.

5. Cover according to Claim 3 or Claim 4, **characterised in that** the resilient means are rubber bands (37, 41).

6. Cover according to any one of the preceding Claims, **characterised in that** the lower edge of the back part (25.2) of the cover head (27) is suspended in the moveable, upper frame part (5) of the backrest (23).

## Revendications

1. Revêtement pour un dossier de siège de véhicule automobile activé par un accident avec une partie supérieure mobile de cadre et une partie inférieure fixe de cadre, le revêtement comportant une partie avant, deux parties latérales et une partie de dossier, **caractérisé en ce que** les parties latérales (26) et la partie de dossier (25) sont divisées dans la zone supérieure de sorte qu'il en résulte une partie inférieure de revêtement (24, 25.1, 26.1) et une tête de revêtement en forme de capuche (27), cette dernière pouvant exécuter sensiblement un mouvement de tangage dans la direction longitudinale du siège autour d'un axe de charnière imaginaire (35) dans la partie avant de revêtement (24) relativement à la partie inférieure de revêtement fixe (24, 25.1, 26.1).

2. Revêtement selon la revendication 1, **caractérisé en ce que** la tête de revêtement (27) chevauche la partie inférieure de revêtement (24, 25.1, 26.1) dans la zone des côtés et du dossier.

3. Revêtement selon la revendication 2, **caractérisé en ce que** les parties latérales (26.1) de la partie inférieure du revêtement sont reliées à la tête de revêtement (27) dans la zone de chevauchement par des moyens élastiques (41) qui sont recouverts vers l'extérieur par les parties latérales (26.2) de la tête de recouvrement (27).

4. Revêtement selon la revendication 2, **caractérisé en ce que**, dans la zone de chevauchement et dans les parties latérales (26.2) de la tête de revêtement (27) dans le bord inférieur de celles-ci, sont insérés des moyens élastiques qui relient entre elles la partie avant (24) et la partie de dossier (25.2) de la tête de revêtement (27).

5. Revêtement selon la revendication 3 ou 4, **caractérisé en ce que** les moyens élastiques sont des bandes en caoutchouc (37, 41).

6. Revêtement selon l'une quelconque des revendications précédentes, **caractérisé en ce que** le bord inférieur de la partie de dossier (25.2) de la tête de revêtement (27) est accroché dans la partie supérieure mobile (5) de cadre du dossier (23).
